# EUROPÄISCHE PATENTSCHRIFT

(11) **EP 3 632 598 B1**
(45) Veröffentlichungstag und Bekanntmachung des Hinweises auf die Patenterteilung: **12.10.2022**
(21) Anmeldenummer: 18198348.7
(22) Anmeldetag: 02.10.2018
(51) Int. Cl.: B23B 31/177

(54) **VIERBACKEN-AUSGLEICHSSPANNFUTTER**
FOUR-JAW COMPENSATING CHUCK
MANDRIN DE COMPENSATION À QUATRE MORS

(43) Veröffentlichungstag der Anmeldung: 08.04.2020
(73) Patentinhaber: HVM Technology GmbH, 28876 Oyten (DE)
(72) Erfinder: Henke, Volker, 28876 Oyten (DE)
(74) Vertreter: Eisenführ Speiser

(56) Entgegenhaltungen:
- EP-A1- 3 028 794
- DE-A1-102015 204 502
- DE-B3-102015 102 100

## Beschreibung

Die Erfindung betrifft ein Vierbacken-Ausgleichsspannfutter gemäß dem Oberbegriff des Patentanspruchs 1, insbesondere Kraftspannfutter, mit einem Gehäuse, in dem eine Antriebseinheit mit einer in Richtung einer Spannachse beweglichen Zugführung angeordnet ist, und zwei Paar einander diametral gegenüberliegenden Grundbacken angeordnet sind, wobei die Grundbacken im Wesentlichen senkrecht zu der Spannachse, vorzugsweise radial, beweglich in dem Gehäuse geführt sind, wobei die Antriebseinheit zwei Paar diametral gegenüberliegend angeordnete Schieber aufweist, wobei jeder Schieber mit einer Grundbacke zur Kraftübertragung auf die Grundbacke gekoppelt ist, um die Bewegung der Zugführung in die Bewegung der Grundbacke umzusetzen.

Ausgleichsspannfutter der vorstehend bezeichneten Art sind beispielsweise aus EP 3028794 A1 bekannt, und werden vorzugsweise zum zentrischen Einspannen von Werkstücken verwendet. Das erfindungsgemäße Ausgleichspannfutter betrifft mithin ein zentrisch spannendes Spannfutter.

Spannfutter der eingangs bezeichneten Art werden auch als Vierbackenfutter bzw. Vierbackenspannfutter bezeichnet. Spannfutter zum zentrischen Spannen sind grundsätzlich immer dann erforderlich, wenn Werkstücke in Werkzeugmaschinen zur maschinellen Bearbeitung eingespannt werden müssen, insbesondere, wenn jene rotatorisch bearbeitet werden. In modernen Fertigungsumgebungen gibt es zunehmend Bedarf nach Spannvorrichtungen, die sowohl zum Drehen als auch zum Fräsen eingesetzt werden können.

Ein Grund, über den Einsatz von Vierbackenfuttern gegenüber konventionellen Dreibackenfuttern nachzudenken, liegt darin, dass bei einer höheren Anzahl von Spannbacken, die das Werkstück umgreifen, die Punktlast auf jede einzelne Spannbacke reduziert wird. Infolgedessen werden bei größerer Anzahl von Spannbacken die auf das Werkstück wirkenden und das Werkstück folglich deformierenden Kräfte gleichmäßiger über den Umfang des Werkstücks verteilt. Hierdurch steigt die Maßhaltigkeit des Werkstücks nach Bearbeitung. Wesentlicher Einsatzzweck von Vierbackenspannfuttern im allgemeinen und ebensolchen mit Ausgleichsfunktion im speziellen ist der Wunsch, auch nicht rotationssymmetrische Werkstücke, bspw. rechteckige, quadratische Bauteile und dergleichen mehr einspannen zu können.

Aus dem Stand der Technik sind Vierbackenspannfutter bekannt. Aufgrund eines fehlenden oder ungenügenden Ausgleichs bezüglich der Werkstückgeometrien kommt es dort zu statischer Überbestimmtheit beim Spannen.

Es sind aus dem Stand der Technik, beispielsweise unter EP 3028794 A1 Vierbacken-Ausgleichsspannfutter bekannt, welche mit hoher Wiederholgenauigkeit exakt zentrisch spannen und ausgleichen können.

Die Ausgleichsfunktion wird bei jenen Spannfuttern erreicht, indem die Zugführung, welche die Zugkraft einer Spanneinrichtung auf die Schieber überträgt, zugleich die Schieber gleitbeweglich führt und um die Spannachse herum rotatorisch im Gehäuse gelagert ist. Die Schieber sind außenliegend zusätzlich drehbar miteinander gekoppelt. Trotz im Allgemeinen zufriedenstellender Funktionsweise, die gegenüber dem konventionellen Stand der Technik der ausgleichenden Spannfutter bereits einen deutlichen Fortschritt darstellt, besteht dennoch weiterer Verbesserungsbedarf, insbesondere hinsichtlich des Wirkungsgrads der Kraftübertragung. Ferner bestand das Bestreben, ein Spannfutter zu entwickeln, welches eine kompaktere Bauweise bei unverminderter oder gesteigerter Festigkeit ermöglicht. Dies sollte erreicht werden, ohne die Wiederholgenauigkeit des Spannfutters negativ zu beeinflussen bzw. jene nach Möglichkeit noch zu verbessern.

Aus DE 10 2015 102 100 B3, die ein Vierbacken-Ausgleichsspannfutter gemäß dem Oberbegriff des Patentanspruchs 1 offenbart, ist ein Keilstangen-Kraftspannfutter bekannt. Das Keilstangen-Kraftspannfutter weist ein axial verschiebbar gelagertes Zugstück und zumindest drei tangential verschiebbar gelagerte Keilschieber und radial verschiebbar gelagerte Grundbacken auf. Die Grundbacken sind über radial-tangential verlaufende Keilführungen mit den Keilschiebern verbunden.

Vor diesem Hintergrund lag der Erfindung die Aufgabe zugrunde, ein Spannfutter der eingangs bezeichneten Art dahingehend zu verbessern, dass die im Stand der Technik aufgefundenen Nachteile möglichst weitgehend überwunden werden. Insbesondere lag der Erfindung die Aufgabe zugrunde, ein Ausgleichsspannfutter der eingangs gezeigten Art dahingehend weiterzuentwickeln, dass die Wiederholgenauigkeit verbessert wird, und möglichst weiterhin eine kompakte Bauform bei zumindest annähernd gleichbleibender Kraftübertragung erreicht wird. Zumindest lag der Erfindung die Aufgabe zugrunde, ein alternatives Ausgleichsspannfutter anzugeben.

Die Erfindung löst die ihr zugrundeliegende Aufgabe bei einem Vierbacken-Ausgleichspannfutter der eingangs bezeichneten Art, indem die Schieber mittels eines um die Spannachse relativ zu der Zugführung drehbaren Ausgleichselement mit der Zugführung wirkverbunden sind, und bezogen auf die Spannachse im Umfangsrichtung beweglich und in radialer Richtung unbeweglich in dem Gehäuse gelagert sind.

Erfindungsgemäß wird unter der Bewegung "in Umfangsrichtung" eine Tangentialbewegung, senkrecht zu einer auf die Spannachse bezogenen radialen Richtung, sowie eine tangentenparallele Bewegung verstanden, oder auch eine kreisbahnförmige Bewegung um die Spannachse herum verstanden.

Die Erfindung macht sich die Erkenntnis zunutze, dass durch das Abstützen der Schieber in radialer Richtung relativ zum Gehäuse eine verbesserte Wirkweise des Spannfutters insgesamt erreicht wird. Insbesondere werden durch die radiale Abstützung die bei Rotation des Spannfutters im Betrieb auftretenden Fliehkräfte besser aufgefangen. Und diejenigen Teile des Spannfutters, die in radialer Richtung bewegt werden, in ihrer Masse insgesamt reduziert. Beim erfindungsgemäßen Spannfutter sind es letztlich lediglich noch die Grundbacken, die in radialer Richtung beweglich sind, so dass bei der erfindungsgemäßen Lösung insgesamt auf Fliehkraft-Ausgleichselemente verzichtet werden kann.

Insbesondere wird die Ausgleichsbewegung der Schieber rein in Umfangsrichtung ausgeführt, so dass auch diese Bewegungskomponente im Wesentlichen fliehkraftunabhängig wird.

In einer bevorzugten Ausführungsform der Erfindung sind die Schieber mit dem Ausgleichselement derart wirkverbunden, dass das Ausgleichselement bei einer rotationsfreien Bewegung eine synchron gegenläufige Bewegung der beiden Schieberpaare bewirkt, und bei einer Drehbewegung des Ausgleichselements eine nicht-synchrone Relativbewegung des zweiten Schieberpaars relativ zu dem ersten Schieberpaar (oder umgekehrt) oder eine synchron gleichläufige Bewegung der Schieberpaare bewirkt. Die Schieberpaare sind vorzugsweise derart mit den Grundbacken wirkverbunden, dass eine synchron gegenläufige Bewegung der beiden Schieberpaare eine synchrone Spannbewegung des ersten Grundbackenpaares und des zweiten Grundbackenpaares bewirkt, während eine nicht-synchrone Relativbewegung des ersten Schieberpaares und des zweiten Schieberpaares zueinander eine nicht-synchrone Bewegung der Grundbackenpaare bewirkt. Die synchron gleichläufige Bewegung der Schieberpaare führt zu einer gegenläufigen Bewegung des ersten Grundbackenpaares relativ zum zweiten Grundbackenpaar.

In einer bevorzugten Weiterbildung der Erfindung sind die Schieber bezogen auf die Spannachse axial unbeweglich im Gehäuse gelagert. Dadurch, dass zur Ausgleichsbewegung keine Axialbewegung der Schieber mehr notwendig ist, kann eine in Richtung der Spannachse möglichst kompakte Bauform des Spannfutters erzielt werden.

In einer bevorzugten Ausführungsform sind die Schieber linear beweglich in korrespondierend ausgebildeten Ausnehmungen des Gehäuses geführt. Solche Ausnehmungen können mit hoher Präzision maschinell gefertigt werden. Ferner wird erreicht, dass die Bewegung der Schieber mechanisch unabhängig von dem Toleranzsystem der Zugführung gemacht wird.

In weiteren bevorzugten Ausgestaltungen der Erfindung weist das Ausgleichselement einen Ringkörper auf, der um die Spannachse herum drehbar und axial entlang der Spannachse gleitend am Gehäuse gelagert ist, vorzugsweise derart, dass auch der Ausgleichsring unabhängig vom Toleranzsystem der Zugführung ist.

In bevorzugten Ausführungsformen sind das Ausgleichselement und die Schieber jeweils mittels einer Umfangsseitig angeordneten ersten Kulissenführung gekoppelt, wobei die Kulissenführung jeweils ein Paar korrespondierend geformter, schräg relativ zu der Spannachse verlaufender und dem Ausgleichselement beziehungsweise an den Schieber ausgebildeter Vorsprünge und Ausnehmungen aufweist.

Vorzugsweise ist ein Teil der Kulissenführung als Wippe an dem Ausgleichselement angeordnet, und der andere Teil der Kulissenführung ist jeweils an einem der Schieber angeordnet. Dadurch, dass die Gleitflächen, welche die Zugbewegung der Zugführung auf die Schieber übertragen, umfangsseitig an den mit der Zugführung gekoppelten Ausgleichselement beziehungsweise an den korrespondierenden Gegenflächen der Schieber ausgebildet sind, wird die Effizienzkraftübertragung und Bewegungseinleitung für die Ausgleichsfunktion gegenüber dem Stand der Technik weiter verbessert. Die Ausgestaltung ermöglicht zudem durch Wahl des passenden Steigungswinkels der schräg zur Spannachse verlaufenden Gleitflächen und entsprechender Dimensionierung des Ausgleichselements in Richtung der Spannachse einen sehr großen Ausgleichsbereich für die Schieber und somit für die Grundbacken des Spannfutters.

Vorzugsweise ist der maximale Ausgleichsweg der Grundbacken mindestens im Wesentlichen gleich dem normalen Verstellweg der Grundbacken für den Spannvorgang.

In bevorzugten Alternativen sind die Gleitflächen als schräg zur Spannachse verlaufende Ausnehmungen an dem Ausgleichsring oder den Schiebern ausgebildet, oder als schräg zur Spannachse verlaufende Vorsprünge an dem Ausgleichsring oder den Schiebern. Weiter vorzugsweise weist jeweils einer der beiden Bewegungspartner schräg zur Spannachse verlaufende Ausnehmungen auf, in welche dann schräg zur Spannachse verlaufende Vorsprünge dessen anderen Bewegungspartners eingreifen.

Die schräg zur Spannachse verlaufenden Gleitflächen weisen in einer bevorzugten Ausführungsform für das erste Schieberpaar eine erste Steigung auf, und für das zweite Schieberpaar eine gegenläufige zweite Steigung, die vorzugsweise betragsmäßig gleich der ersten Steigung ist.

Ein Teil der Kulissenführung ist in bevorzugten Ausführungsformen vorzugsweise als Wippe an dem Ausgleichselement angeordnet, und der andere Teil der Kulissenführung ist dann jeweils an einem der Schieber angeordnet. Die Ausführung als Wippe wird vorzugsweise derart weitergebildet, dass die Wippen um einen vorbestimmten Winkel relativ zu dem Ausgleichselement schwenkbar angeordnet sind, vorzugsweise jeweils um eine Parallele zu der Spannachse. Es wird als vorteilhaft angesehen, den Abstand zwischen den Gleitflächen und der Schwenkachse konstruktiv so gering wie möglich zu wählen, um das Prinzip der möglichst kurzen Hebelarme beizubehalten. Die Ausführung eines Teils der Kulissenführung als Wippe verbessert die Kraftübertragung bei größeren Rotationsbewegungen im Vergleich zum Stand der Technik, da sich die Schieber, sofern tangential, beziehungsweise tangentenparallel, im Gehäuse geführt, bei zunehmender seitlicher Bewegung von der Spannachse wegbewegen. Die Schwenkbeweglichkeit der Wippen verhindert in diesen Bewegungszuständen ein Verkanten.

In einer weiteren bevorzugten Ausführungsform sind die Wippen um einen vorbestimmten Betrag bezogen auf die Spannachse S radialbeweglich angeordnet. Besonders bevorzugt sind die Wippen an Schwenkbolzen gelagert, wobei die Schwenkbolzen radial beweglich im Ausgleichselement aufgenommen sind. Hierdurch wird der Eingriff der Gleitflächen miteinander auch bei größeren Verschiebungsbewegungen der Schieber in seitlicher Richtung beibehalten.

Die Wippen sind vorzugsweise zumindest partiell in einer Ausnehmung in dem Ausgleichselement aufgenommen, und vorzugsweise mittels eines Schwenkbolzens mit dem Ausgleichselement gekoppelt.

In einer weiteren bevorzugten Ausführungsform sind die Grundbacken und die Schieber jeweils mittels einer zweiten Kulissenführung miteinander gekoppelt, wobei die zweite Kulissenführung stirnseitig zwischen den Schiebern und den Grundbacken ausgebildet und dazu eingerichtet ist, die Bewegung der Schieber in Umfangsrichtung in einem bezogen auf die Spannachse radiale Bewegung umzusetzen, wobei jeweils ein Teil der zweiten Kulissenführung an der jeweiligen Grundbacke ausgebildet ist, und der jeweils andere Teil an dem jeweiligen Schieber. Wie auch bei der ersten Kulissenführung ist in bevorzugten alternativen Ausgestaltungen entweder ein Vorsprung an dem Schieber ausgebildet, oder eine Ausnehmung, wobei das korrespondierende Gegenteil dann an der Grundbacke ausgebildet ist.

In einem weiteren Aspekt der Erfindung weist die Zugführung wenigstens einen Lagerabschnitt für das Gehäuse auf, wobei das Gehäuse einen oder mehrere korrespondierend ausgebildete Lagerabschnitte aufweist, und die Zugführung mit dem bzw. den korrespondierenden Lagerabschnitten an dem Gehäuse gelagert ist. Dies verringert die Notwendigkeit und Länge von Toleranzketten innerhalb des Spannfutters, was zu einer höheren Zentriergenauigkeit und Wiederholgenauigkeit führt.

Vorzugsweise bilden die korrespondierenden Lagerabschnitte jeweils miteinander eine Rundpassung aus, insbesondere eine Übergangspassung oder eine Übermaßpassung. Bei Auswahl einer entsprechend geeigneten Passung kann die Zugführung demnach auch als Zentrierung für die Gehäuseteile dienen.

In einer bevorzugten Ausführungsform ist das Gehäuse mehrteilig ausgebildet, wobei die Zugführung für jedes der Gehäuseteile einen Lagerabschnitt aufweist, und die Gehäuseteile jeweils einen korrespondierenden Lagerabschnitt aufweisen, mittels dessen sie an der Zugführung gelagert sind.

Die Erfindung wird im Folgenden anhand eines bevorzugten Ausführungsbeispiels unter Bezugnahme auf die beigefügten Figuren näher erläutert. Hierbei zeigen:
- Figur 1: eine erste räumliche Ansicht eines Spannfutters gemäß einem bevorzugten Ausführungsbeispiel,
- Figur 2: eine räumliche Ansicht des Spannfutters gemäß Figur 1 in einem teilmontierten Zustand,
- Figur 3: eine weitere räumliche Ansicht des Spannfutters gemäß den Figuren 1 und 2 in einem weiteren teilmontierten Zustand,
- Figur 4: eine räumliche Ansicht eines Teils des Spannfutters gemäß den Figuren 1 bis 3 in einer Explosionsansicht,
- Figur 5: eine schematische Draufsicht auf das Spannfutter gemäß Figuren 1 bis 4 im Spannbetrieb, und
- Figur 6: eine schematische Draufsicht auf das Spannfutter gemäß den Figuren 1 bis 4 im Ausgleichsbetrieb.

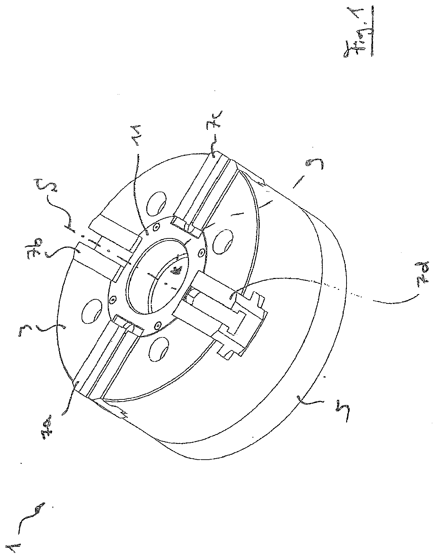

Figur 1 zeigt zunächst ein Ausgleichsspannfutter 1 gemäß einem bevorzugten Ausführungsbeispiel der vorliegenden Erfindung. Das Ausgleichsspannfutter 1 weist ein Gehäuse mit einem Oberteil 3 und einem Unterteil 5 auf. Das Gehäuseunterteil 5 wiederum ist zur Montage an einer Werkzeugmaschine vorbereitet. In dem Gehäuse 3, 5 sind jeweils Führungen vorgesehen, in denen insgesamt vier Grundbacken 7a-d beweglich geführt aufgenommen sind. Die Grundbacken 7a, 7c bilden ein erstes Grundbackenpaar, während die Grundbacken 7b, 7d ein zweites Grundbackenpaar bilden. Die Grundbacken eines jeweiligen Paares 7a,c und 7b,d sind jeweils einander diametral gegenüberliegend angeordnet.

Das in den Figuren gezeigte Ausgleichsspannfutter 1 ist als Kraftspannfutter ausgebildet. Alternativ zum Antrieb mittels Kraftspannung liegt ein Ausgleichsspannfutter mit einer Antriebseinheit, die die nachfolgend beschriebene Kinematik aufweist, aber mittels Handspannung betätigt wird, ebenso im Rahmen der Erfindung.

Das Gehäuse 3, 5 umhaust eine Antriebseinheit 9, die eine Spannbewegung eines Zugrohres oder - je nach Ausführung - einer Zugstange in Richtung einer Spannachse S umsetzt in eine radiale Bewegung der Grundbackenpaare 7a,c und 7b,d zentrisch aufeinander zu bzw. voneinander weg. Der innere Aufbau der Antriebseinheit 9 ergibt sich aus den folgenden Figuren.

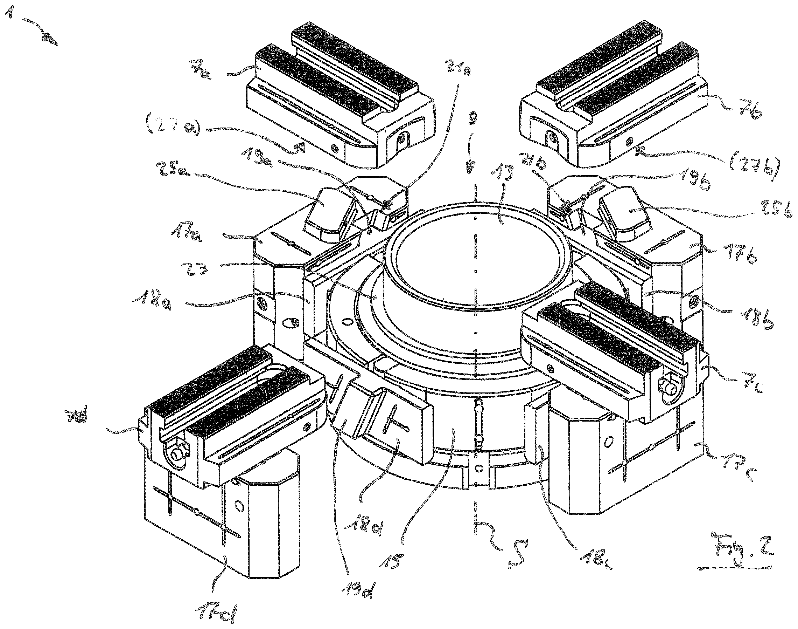

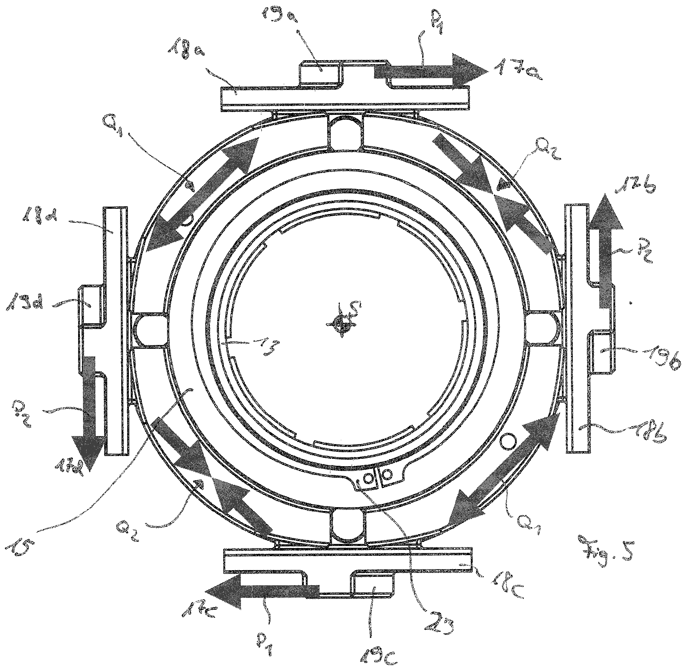

In Figur 2 ist das Ausgleichsspannfutter 1 ohne das Gehäuse 3, 5 dargestellt. Im Inneren des Ausgleichsspannfutter 1 ist die Zugführung 13 angeordnet. Die Zugführung 13 ist mit einem Ausgleichselement 15 gekoppelt, welches zur Kraftübertragung von der Zugführung 13 auf insgesamt vier in Umfangsrichtung, nämlich in Bezug auf die Spannachse S tangential bzw. tangentenparallel, beweglich geführte Schieber 17a-d eingerichtet ist. Das Ausgleichselement 15 ist drehbar an der Zugführung 13 gelagert und sorgt dafür, dass bei einer rotationsfreien Bewegung des Ausgleichselements 15 alle Schieber 17a-d gegenläufig synchron zu der Zugführung 13 bewegt werden, vgl. Figur 5.

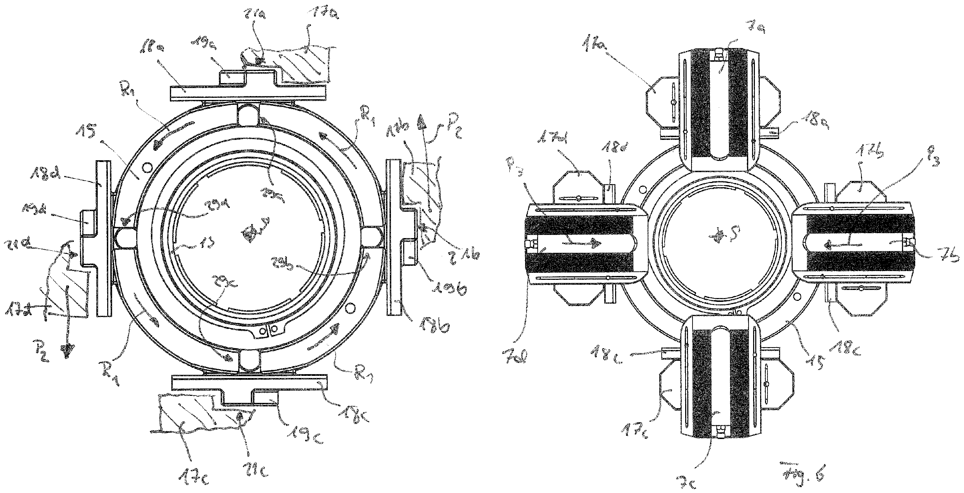

Bei einer Rotation des Ausgleichselements 15 relativ zur Zugführung 13 um die Spannachse S herum wird eine Relativbewegung benachbarter Schieber bewirkt, vgl. Fig. 6.

Einander gegenüberliegende Schieber 17a,c bilden ein erstes Schieberpaar, und die einander gegenüberliegenden Schieber 17b,d bilden ein zweites Schieberpaar. Die Schieber innerhalb eines Schieberpaares 17a,c; 17b,d werden von dem Ausgleichselement 15 immer synchron bewegt. Auf die Kinematik der Ausgleichsbewegung wird im Folgenden näher eingegangen.

Die Schieber 17a-d sind jeweils mit einer der Grundbacken 7a-d gekoppelt, derart, dass die Bewegung der Schieber 17a-d in Umfangsrichtung umgesetzt wird in eine Radialbewegung der Grundbacken 7 a-d auf die Spannachse S zu bzw. von ihr weg.

An dem Ausgleichselement 15 sind mehrere, nämlich insgesamt vier, Wippen 18 angeordnet, an denen jeweils schräg zur Spannachse S verlaufende Vorsprünge 19 ausgebildet sind, die Gleitflächen aufweisen und dazu eingerichtet sind, mit korrespondierenden schräg zur Spannachse S verlaufenden Ausnehmungen 21 a-d (vgl. Fig. 5, 6) in den Schiebern 17a-d nach Art einer ersten Kulissenführung zusammenzuwirken.

An den Schiebern 17 a-d sind stirnseitig wiederum Vorsprünge 25 a-d ausgebildet, die mit korrespondierend geformten Ausnehmungen 27 a-d (angedeutet) in den Unterseiten der Grundbacken 7 a-d zusammenwirken, um die Bewegung der Schieber 17 a-d in eine Radialbewegung der Grundbacken 7a-d umzusetzen.

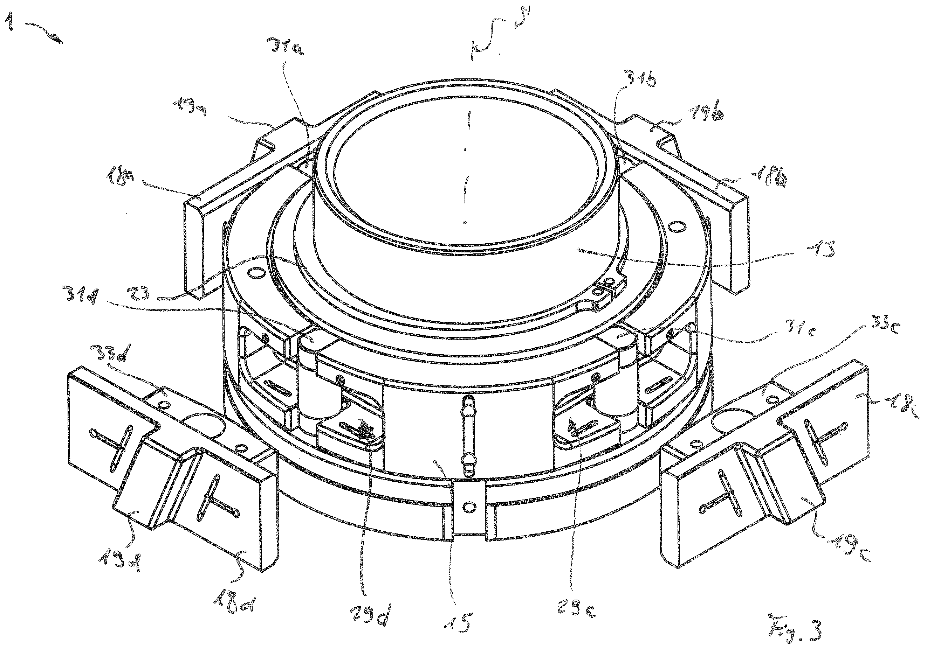

Wie sich aus Figur 3 ergibt, weisen die schräg zur Spannachse S verlaufenden Gleitflächen an den Wippen 18 a,c für das erste Schieberpaar 17a,c eine erste, gleichsinnige Steigung auf, während die schräg zur Spannachse S verlaufenden Gleitflächen an den Wippen 18b,d für das zweite Schieberpaar 17 b,d eine gegenläufige Steigung vorzugsweise gleichen Betrags aufweisen. Die gegenläufige Ausrichtung der schräg zur Spannachse S verlaufenden Gleitflächen an den Vorsprüngen 19 bzw. Ausnehmungen 21 sorgt dafür, dass das Ausgleichselement 15, welches optional mittels eines Spannrings 23 an der Zugführung 13 in Richtung der Spannachse S axial gehalten wird, das Ausgleichsspiel der Grundbacken 7a-d regelt, wie sich aus Figur 6 ergibt.

Die Wippen 18a-d sind schwenkbar an dem Ausgleichselement 15 montiert, um der Bewegung der Schieber 17a-d besser folgen zu können. Zusätzlich sind die Wippen 18 a-d an Schwenkbolzen 31 a-d montiert, welche ihrerseits radial bezogen auf die Spannachse S um einen vorbestimmten Betrag ausgelenkt werden können.

Die Wippen 18 a-d weisen einen Grundkörper 33 a-d auf, der jeweils zumindest partiell in einer korrespondierenden Ausnehmung 29 a-d in dem Ausgleichselement 15 eingelassen ist, um eine erhöhte Systemstabilität zu erreichen und die Hebelwege zwischen dem Schwenkbolzen 31 und den Vorsprüngen 19 a-d möglichst gering halten zu können.

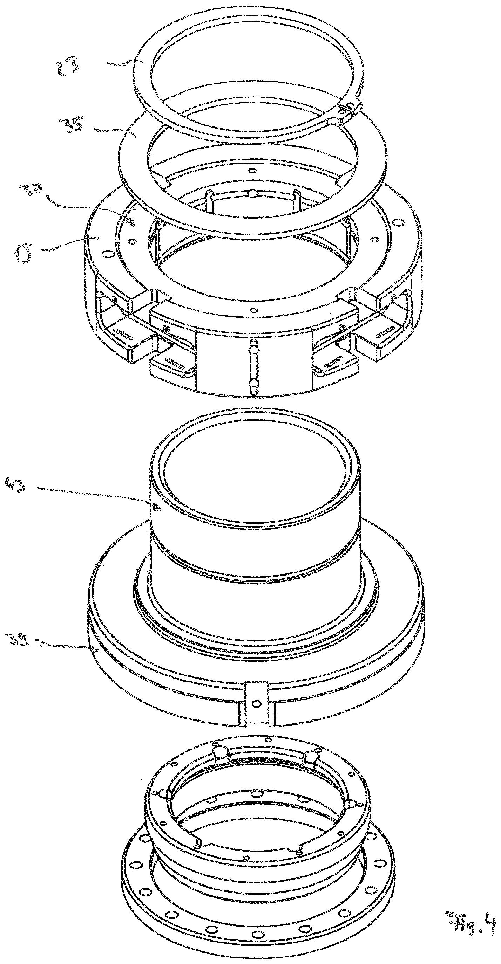

Figur 4 zeigt einen weiteren Aspekt der Erfindung. Die Zugführung 13 weist einen ersten Lagerabschnitt 39 und einen zweiten Lagerabschnitt 43 auf. Die Lagerabschnitte 39, 43 sind jeweils mit einem Passmaß versehen. Der erste Lagerabschnitt 39 ist zur Aufnahme eines korrespondierend ausgebildeten, mit Passmaß versehenen Lagerabschnitt des Unterteils 5 des Gehäuses eingerichtet. Der zweite Lagerabschnitt 43 ist zur Aufnahme eines korrespondierend ausgebildeten, mit Passmaß versehenen Lagerabschnitts des Oberteils 3 des Gehäuses eingerichtet. Vorzugsweise sind die Passungen der Lagerabschnitte 39, 43 so ausgewählt, dass eine spielarme, insbesondere spielfreie Passung bzw. Zentrierung der gehäuseteile 3, 5 zueinander mittels der Zugführung 13 erreicht wird.

Das Ausgleichselement 15 wird mittels des Spannrings 23 an der Zugführung 13 befestigt. Die Kraftübertragung zwischen der Zugführung und den Kulissenführungen der Antriebseinheit 9 wird über ein Ringelement 35 und eine korrespondierend geformte Kontaktfläche 37 auf dem Ausgleichselement 15 geleitet.

In Figur 5 ist zur Veranschaulichung der Funktionsweise des Spannfutters 1 zunächst eine normale Spannbewegung ohne Ausgleichsbewegungen dargestellt. Wird die Zugführung 13 und mit ihr das Ausgleichselement 15 in Richtung der Spannachse S bewegt, werden auch die Wippen 18a-d in Richtung der Spannachse S bewegt. Zwischen den schräg zur Spannachse S verlaufenden Gleitflächen der Vorsprünge 19 und den korrespondierenden Ausnehmungen 21 (vgl. Fig. 2) tritt Reibung auf, und infolgedessen werden die Schieber 17a-d tangential in Richtung der Pfeile P₁ und P₂ bewegt. Die Schieber 17 a-d sorgen wiederum über die Vorsprünge 25 a-d und Ausnehmungen 27 a-d für eine radiale Bewegung der Grundbacken 7a-d auf die Spannachse S zu, vgl. Fig. 2. Die Schieber 17a,c bewegen sich gegenläufig synchron zu den Schiebern 17b,d, sofern die Steigungen der Vorsprünge 19 a,c und 19b,d betragsgleich und gegensinnig sind. Das führt zu einer vollständigen Kompensation der auftretenden Querkräfte im Ausgleichselement 15, angedeutet durch die Pfeile Q₁ und Q₂.

Nachdem in Figur 5 die "normale" Spannbewegung anhand der Bewegung der Wippen 18a-d gezeigt wurde, wird in Figur 6 die Ausgleichsbewegung veranschaulicht. Es soll zur Verdeutlichung davon ausgegangen werden, dass beim Spannvorgang die Grundbacken 7a und 7c durch Anlage an ein Werkstück während des Spannvorgangs gestoppt werden. Durch das Anliegen an dem Werkstück ist eine Weiterbewegung der Grundbacken 7a, 7c nicht mehr möglich. Deswegen werden auch die Schieber 17a, 17c an ihrer Weiterbewegung gehindert. Da aber nach wie vor Kraft über die Zugführung 13 auf das Ausgleichselement 15 ausgeübt wird in Richtung der Spannachse S, gleiten die Vorsprünge 19a,c in den Ausnehmungen 21a,c schraubenartig ab, was eine spiralförmige Rotationsbewegung des Ausgleichselements 15 in Richtung der Pfeile R₁ zur Folge hat. Die übrigen Wippen 18b,d gehen diese Spiralbewegung zwangsläufig mit. Da aber die Vorsprünge 19b,d und Ausnehmungen 21b, d für das zweite Schieberpaar 17b, 17d gegenläufig zu dem ersten Schieberpaar 17a, 17c ausgerichtet sind, werden die Schieber 17b,d in Richtung der Pfeile P₂ durch das Ausgleichselement 15 weiter bewegt, bis auch die Grundbacken 7b,d soweit auf die Spannachse S bewegt wurden, dass sie in Anlage mit dem Werkstück gelangen. Analog vorzeichenverkehrt würde sich der Vorgang vollziehen, wenn nicht das erste Schieberpaar 17a,c sondern das zweite Schieberpaar 17b,d zuerst durch in Anlage geratenden entsprechenden Grundbacken mit dem Werkstück arretiert würde.

## Patentansprüche

1. Vierbacken-Ausgleichsspannfutter, mit
einem Gehäuse (3), in dem eine Antriebseinheit (9) mit einer in Richtung einer Spannachse (S) beweglichen Zugführung (13) angeordnet ist, und zwei Paar einander diametral gegenüberliegender Grundbacken (7a, c; 7b, d) angeordnet sind,
wobei die Grundbacken (7a - d) im Wesentlichen senkrecht zu der Spannachse (S), vorzugsweise radial, beweglich in dem Gehäuse geführt sind,
wobei die Antriebseinheit (9) zwei Paar diametral gegenüberliegend angeordneter Schieber (17a,c; 17b,d) aufweist, wobei jeder Schieber (17a-d) mit einer Grundbacke (7a-d) zur Kraftübertragung auf die Grundbacke (7a-d) gekoppelt ist, um die Bewegung der Zugführung in die Bewegung der Grundbacke umzusetzen, **dadurch gekennzeichnet, dass** die Schieber (17a,c; 17b,d) mittels eines um die Spannachse (S)
relativ zu der Zugführung (13) drehbaren Ausgleichselements (15) mit der Zugführung (13) wirkverbunden sind, und
bezogen auf die Spannachse (S) in Umfangsrichtung beweglich und in radialer Richtung unbeweglich in dem Gehäuse gelagert sind.

2. Spannfutter nach Anspruch 1,
wobei die Schieber mit dem Ausgleichselement derart wirkverbunden sind, dass das Ausgleichselement (15) bei einer rotationsfreien Bewegung eine synchron gegenläufige Bewegung der beiden Schieberpaare (17a,c; 17b,d) bewirkt, und bei einer Drehbewegung eine nichtsynchrone Relativbewegung des zweiten Schieberpaares (7b, d) relativ zu dem ersten Schieberpaar (7a, c), oder eine synchron gleichläufige Bewegung bewirkt.

3. Spannfutter nach Anspruch 1 oder 2,
wobei die Schieber bezogen auf die Spannachse (S) axial unbeweglich im Gehäuse gelagert sind.

4. Spannfutter nach einem der vorstehenden Ansprüche,
wobei die Schieber linear beweglich in korrespondierend ausgebildeten Ausnehmungen geführt sind.

5. Spannfutter nach einem der vorstehenden Ansprüche,
wobei das Ausgleichselement (15) einen Ringkörper aufweist, der um die Spannachse (S) herum drehbar und axial entlang der Spannachse (S) gleitend im Gehäuse (3, 5) gelagert ist.

6. Spannfutter nach einem der vorstehenden Ansprüche,
wobei das Ausgleichselement (15) und die Schieber (17a-d) jeweils mittels einer umfangsseitig angeordneten ersten Kulissenführung gekoppelt sind, wobei die Kulissenführung jeweils ein Paar korrespondierend geformter, schräg zur Spannachse (S) verlaufender und an dem Ausgleichselement (15) bzw. an den Schiebern ausgebildeter Vorsprünge (19a-d) und Ausnehmungen (21a-d) aufweist.

7. Spannfutter nach Anspruch 6,
wobei ein Teil der ersten Kulissenführung als Wippe (18a-d) an dem Ausgleichselement (15) angeordnet ist, und der andere Teil der Kulissenführung jeweils an einem der Schieber angeordnet ist.

8. Spannfutter nach Anspruch 6 oder 7,
wobei schräg zur Spannachse (S) verlaufende Gleitflächen für das erste Schieberpaar (17a,c) eine erste Steigung, und für das zweite Schieberpaar (17b,d) eine gegenläufige zweite Steigung aufweisen, die vorzugsweise betragsmäßig gleich der ersten Steigung ist.

9. Spannfutter nach Anspruch 7 oder Anspruch 8, wenn abhängig von Anspruch 7,
wobei die Wippen (18a-d) um einen vorbestimmten Winkel relativ zu dem Ausgleichselement (15) schwenkbar angeordnet sind, vorzugsweise jeweils um eine Parallele zu der Spannachse (S).

10. Spannfutter nach einem der Ansprüche 7 bis 9,
wobei die Wippen (18a-d) um einen vorbestimmten Betrag bezogen auf die Spannachse (S) radial beweglich angeordnet sind.

11. Spannfutter nach einem der Ansprüche 7 bis 10,
wobei die Wippen (18a-d) jeweils zumindest partiell in einer Ausnehmung (29a-d) in dem Ausgleichselement (15) aufgenommen sind, und vorzugsweise mittels eines Schwenkbolzens (31a-d) mit dem Ausgleichselement (15) gekoppelt sind.

12. Spannfutter nach einem der vorstehenden Ansprüche,
wobei die Grundbacken (7a-d) und die Schieber (17a-d) jeweils mittels einer zweiten Kulissenführung miteinander gekoppelt sind, wobei die zweite Kulissenführung stirnseitig zwischen den Schiebern (17a-d) und den Grundbacken (7a-d) ausgebildet und dazu eingerichtet ist, die Bewegung der Schieber in Umfangsrichtung in eine bezogen auf die Spannachse (S) radiale Bewegung umzusetzen, wobei jeweils ein Teil der zweiten Kulissenführung an der jeweiligen Grundbacke ausgebildet ist, und der jeweils andere Teil an dem jeweiligen Schieber ausgebildet ist.

13. Spannfutter nach einem der vorstehenden Ansprüche,
wobei die Zugführung (13) wenigstens einen Lagerabschnitt (39, 43) für das Gehäuse (3, 5) aufweist,
wobei das Gehäuse (3, 5) und das Ausgleichselement (15) korrespondierend ausgebildete Lagerabschnitte aufweisen, und die Zugführung (13) mit korrespondierenden Lagerabschnitten an dem Gehäuse (3, 5) gelagert ist.

14. Spannfutter nach Anspruch 13,
wobei die korrespondierenden Lagerabschnitte (39, 43) jeweils miteinander eine Rundpassung ausbilden, insbesondere eine Übergangspassung oder Übermaßpassung.

15. Spannfutter, nach Anspruch 13 oder 14,
wobei das Gehäuse (3,5) mehrteilig ausgebildet ist, und die Zugführung für jedes der Gehäuseteile einen Lagerabschnitt (39,43) aufweist, und die Gehäuseteile jeweils einen korrespondierenden Lagerabschnitt aufweisen.

## Claims

1. Four-jaw compensation chuck, having a housing (3), in which a drive unit (9) having a routed cable (13) that can be moved in the direction of a chucking axis (S) is arranged, and two pairs of diametrically opposite base jaws (7a, c; 7b, d) are arranged,
wherein the base jaws (7a - d) are guided substantially perpendicularly to the chucking axis (S), preferably radially, moveably in the housing,
wherein the drive unit (9) has two pairs of diametrically oppositely arranged slides (17a, c; 17b, d), wherein each slide (17a-d) is coupled to a base jaw (7a-d) for transferring force to the base jaw (7a-d), in order to convert the movement of the routed cables into the movement of the base jaw,
**characterised in that** the slides (17a, c; 17b, d) are actively connected to the routed cables (13) by means of a compensation element (15) that can be rotated around the chucking axis (S) in relation to the routed cables (13), and
in relation to the chucking axis (S), are mounted in the housing moveably in the peripheral direction and immovably in the radial direction.

2. Chuck according to claim 1,
wherein the slides are actively connected to the compensation element in such a way that the compensation element (15) causes a synchronously reverse movement of the two slide pairs (17a, c; 17b, d) in the event of a rotation-free movement and causes a non-synchronous relative movement of the second slide pair (7b, d) in relation to the first slide pair (7a, c) or a synchronously equidirectional movement in the event of a rotational movement.

3. Chuck according to claim 1 or 2,
wherein the slides are mounted axially immovably in the housing in relation to the chucking axis (S).

4. Chuck according to one of the preceding claims,
wherein the slides are guided linearly moveably in correspondingly formed recesses.

5. Chuck according to one of the preceding claims,
wherein the compensation element (15) has an annular body, which can be rotated around the chucking axis (S) and is mounted axially on the chucking axis (S) to slide in the housing (3, 5).

6. Chuck according to one of the preceding claims,
wherein the compensation element (15) and the slides (17a-d) are each coupled by means of a first slotted guide arranged on the peripheral side, wherein the slotted guide respectively has a pair of correspondingly formed protrusions (19a-d) and recesses (21a-d) running obliquely to the chucking axis (S) and formed on the compensation element (15) or on the slides.

7. Chuck according to claim 6,
wherein a part of the first slotted guide is arranged as a rocker (18a-d) on the compensation element (15), and the other part of the slotted guide is respectively arranged on one of the sliders.

8. Chuck according to claim 6 or 7,
wherein gliding surfaces running obliquely to the chucking axis (S) for the first slide pair (17a, c) have a first incline and an opposite second incline for the second slide pair (17b, d) which is preferably the same, in terms of amount, as the first incline.

9. Chuck according to claim 7 or claim 8, when dependent on claim 7,
wherein the rockers (18a-d) are arranged pivotably at a predetermined angle in relation to the compensation element (15), preferably each around a parallel to the chucking axis (S).

10. Chuck according to one of claims 7 to 9,
wherein the rockers (18a-d) are arranged to be radially moveable by a predetermined amount in relation to the chucking axis (S).

11. Chuck according to one of claims 7 to 10,
wherein the rockers (18a-d) are each received at least partially in a recess (29a-d) in the compensation element (15), and are preferably coupled to the compensation element (15) by means of a pivoting bolt (31a-d).

12. Chuck according to one of the preceding claims,
wherein the base jaws (7a-d) and the slides (17a-d) are each coupled to each other by means of a second slotted guide, wherein the second slotted guide is formed on the end face between the slides (17a-d) and the base jaws (7a-d) and is set up to convert the movement of the slide in the peripheral direction into a radial movement in relation to the chucking axis (S), wherein in each case one part of the second slotted guide is formed on the respective base jaw, and the respectively other part is formed on the respective slide.

13. Chuck according to one of the preceding claims,
wherein the routed cables (13) have at least one bearing portion (39, 43) for the housing (3, 5), wherein the housing (3, 5) and the compensation element (15) have correspondingly formed bearing portions, and the routed cables (13) with corresponding bearing portions are mounted on the housing (3, 5).

14. Chuck according to claim 13,
wherein the corresponding bearing portions (39, 43) each form a circular mount with one another, in particular a transition mount or excess mount.

15. Chuck according to claim 13 or 14,
wherein the housing (3, 5) is formed in several parts, and the routed cables have a bearing portion (39, 43) for each of the housing parts, and the housing parts each have a corresponding bearing portion.

## Revendications

1. Mandrin de compensation à quatre mors, avec
un boîtier (3), dans lequel une unité d'entraînement (9) avec un guide de traction (13) mobile en direction d'un axe de serrage (S) est disposée et deux paires de mors de base (7a, c ; 7b, d) diamétralement opposés sont disposés,
dans lequel les mors de base (7a-d) sont guidés dans le boîtier de manière mobile sensiblement perpendiculairement par rapport à l'axe de serrage (S), de préférence radialement,
dans lequel l'unité d'entraînement (9) présente deux paires de coulisseaux (17a, c ; 17b, d) disposés de manière diamétralement opposée, dans lequel chaque coulisseau (17a-d) est couplé à un mors de base (7a-d) pour la transmission de force sur le mors de base (7ad) pour convertir le déplacement du guide de traction en le mouvement du mors principal,
**caractérisé en ce que** les coulisseaux (17a, c ; 17b, d) coopèrent avec le guide de traction (13) au moyen d'un élément de compensation (15) pouvant tourner par rapport au guide de traction (13) autour de l'axe de serrage (S), et
sont montés dans le boîtier de manière mobile dans la direction périphérique et de manière immobile dans la direction radiale par rapport à l'axe de serrage (S).

2. Mandrin selon la revendication 1,
dans lequel les coulisseaux coopèrent de telle manière avec l'élément de compensation que l'élément de compensation (15) entraîne, lors d'un déplacement sans rotation, un déplacement inverse de manière synchrone des deux paires de coulisseaux (17a, c ; 17b, d) et entraîne, lors d'un déplacement en rotation, un déplacement relatif non synchrone de la seconde paire de coulisseaux (7b, d) par rapport à la première paire de coulisseaux (7a, c) ou un déplacement dans le même sens de manière synchrone.

3. Mandrin selon la revendication 1 ou 2,
dans lequel les coulisseaux sont montés dans le boîtier de manière immobile axialement par rapport à l'axe de serrage (S).

4. Mandrin selon l'une quelconque des revendications précédentes,
dans lequel les coulisseaux sont guidés de manière mobile linéairement dans des évidements réalisés de manière correspondante.

5. Mandrin selon l'une quelconque des revendications précédentes,
dans lequel l'élément de compensation (15) présente un corps annulaire, qui est monté dans le boîtier (3, 5) de manière à pouvoir tourner tout autour de l'axe de serrage (S) et de manière à glisser axialement le long de l'axe de serrage (S).

6. Mandrin selon l'une quelconque des revendications précédentes,
dans lequel l'élément de compensation (15) et les coulisseaux (17a-d) sont couplés respectivement au moyen d'un premier guide à coulisse disposé côté périphérie, dans lequel le guide à coulisse présente respectivement une paire de parties faisant saillie (19a-d) et d'évidements (21a-d) formés de manière correspondante, s'étendant de manière oblique par rapport à l'axe de serrage (S) et réalisés sur l'élément de compensation (15) ou sur les coulisseaux.

7. Mandrin selon la revendication 6,
dans lequel une partie du premier guide à coulisse est disposée en tant que bascule (18a-d) sur l'élément de compensation (15) et l'autre partie du guide à coulisse est disposée respectivement sur un des coulisseaux.

8. Mandrin selon la revendication 6 ou 7,
dans lequel des surfaces de glissement s'étendant de manière oblique par rapport à l'axe de serrage (S) pour la première paire de coulisseaux (17a, c) présentent une première pente et celles pour la seconde paire de coulisseaux (17b, d) présentent une deuxième pente opposée, qui est de préférence quant à la valeur identique à la première pente.

9. Mandrin selon la revendication 7 ou la revendication 8, lorsqu'elle dépend de la revendication 7,
dans lequel les bascules (18a-d) sont disposées de manière à pouvoir pivoter d'un angle prédéterminé par rapport à l'élément de compensation (15), de préférence
respectivement autour d'une parallèle par rapport à l'axe de serrage (S).

10. Mandrin selon l'une quelconque des revendications 7 à 9,
dans lequel les bascules (18a-d) sont disposées de manière mobile radialement sur l'axe de serrage (S) d'une valeur prédéfinie.

11. Mandrin selon l'une quelconque des revendications 7 à 10,
dans lequel les bascules (18a-d) sont logées respectivement au moins en partie dans un évidement (29ad) dans l'élément de compensation (15), et de préférence sont couplées au moyen d'un boulon de pivotement (31ad) à l'élément de compensation (15).

12. Mandrin selon l'une quelconque des revendications précédentes,
dans lequel les mors de base (7a-d) et les coulisseaux (17a-d) sont couplés les uns aux autres respectivement au moyen d'un deuxième guide à coulisse, dans lequel le deuxième guide à coulisse est réalisé côté frontal entre les coulisseaux (17a-d) et les mors de base (7a-d) et est mis au point pour convertir le déplacement des coulisseaux dans la direction périphérique en un déplacement radial par rapport à l'axe de serrage (S), dans lequel respectivement une partie du deuxième guide à coulisse est réalisée sur le mors de base respectif et l'autre partie respectivement est réalisée sur le coulisseau respectif.

13. Mandrin selon l'une quelconque des revendications précédentes,
dans lequel le guide de traction (13) présente au moins une section de palier (39, 43) pour le boîtier (3, 5),
dans lequel le boîtier (3, 5) et l'élément de compensation (15) présentent des sections de palier réalisées de manière correspondante et le guide de traction (13) avec des sections de palier correspondantes est monté sur le boîtier (3, 5).

14. Mandrin selon la revendication 13,
dans lequel les sections de palier (39, 43) correspondantes réalisent respectivement les unes avec les autres un ajustement rond, en particulier un ajustement de transition ou un ajustement serré.

15. Mandrin selon la revendication 13 ou 14,
dans lequel le boîtier (3, 5) est réalisé en plusieurs parties et le guide de traction présente pour chacune des parties de boîtier une section de palier (39, 43), et les parties de boîtier présentent respectivement une section de palier correspondante.
